# EUROPEAN PATENT APPLICATION

(11) **EP 1 069 732 A2**
(43) Date of publication of application: **17.01.2001**
(21) Application number: 00115154.7
(22) Date of filing: 12.07.2000
(51) Int. Cl.: H04L 12/40, H04Q 9/00

(54) **Communication equipment realizing easy communication between apparatus**

(30) Priority: 13.07.1999 JP 19835599
(71) Applicant: Yozan Inc., Tokyo 155-0031 (JP)
(72) Inventor: Takatori, Sunao, c/o Yozan Inc., Tokyo 155-0031 (JP); Yamamoto, Makoto, Yokohama-shi, Kanagawa 223-0056 (JP)
(74) Representative: Grünecker, Kinkeldey, Stockmair & Schwanhäusser Anwaltssozietät

(57) **Abstract**

Power supply sockets of a distributing system of interior power supply wiring are provided with a communication distributing terminal, and apparatus (A1-An) are provided with a terminal unit 2 for connection to a communication line CL. A unique address is assigned for the terminal unit 2. A communication line CL is provided with a timing clock supply line TL, a unique address communication line AL, and a local area network (LAN) line LL, thereby connecting the apparatus (A1-An) connected to the power supply socket to the communication line CL. The unique address of the terminal unit 2 connected to the communication line CL is transmitted to the unique address communication line AL, and communication with the terminal unit 2 is controlled through the LAN line LL by the communication control unit 1. The terminal unit 2 transmits its own unique address to the unique address transmission line AL during a predetermined address registration period, when it failed to find its own unique address in unique addresses transmitted from the communication control unit 1. Thereby realizes very easy communication between the apparatus (A1-An).

## Description

### BACKGROUND OF THE INVENTION

### FIELD OF THE INVENTION

The present invention relates to a communication equipment for communication between apparatus connected to a distributing system of interior wiring.

### DESCRIPTION OF THE RELATED ARTS

Recently, there has been a marked tendency to handle information with multimedia. Accordingly, the diversity of information being sent and received has increased remarkably.

Therefore, information processing apparatus, such as personal computers, have become increasingly widespread. Many new types of information media are under consideration, such as plans for infrastructure to promote high-speed and low-cost public telephone networks.

In spite of the growth of such apparatus, which have spread not only to factories and offices, but also to ordinary homes, even the mere connection of a TA (terminal adapter) to a digital public telephone system is, for common users still quite difficult. In order to successfully complete the connections of two (or more) apparatus within the LAN (local area network), the understanding of a much more complicated system of wiring and settings is required. That is, until recently, the distributing system for such things as TV antennas and telephones has only dealt with these apparatus individually. However, there is now a need for the consideration of communication between such apparatus.

### SUMMARY OF THE INVENTION

The present invention has been made to solve such above problems, and to offer a communication equipment to realize very easy communication between the apparatus.

The communication equipment according to the present invention provides a power supply socket of interior wiring for power distributing system with a communication distributing terminal (communication terminal). An apparatus may be connected to other apparatus only by connecting the plug of the apparatus to the socket. The apparatus is provided with a terminal unit for connection to the communication line, and a unique address is assigned for the terminal unit. A communication line is provided with a timing clock supply line, a unique address communication line, and a local area network (LAN) line, and the apparatus connected to the above power supply socket is connected to the above communication line. A communication control unit is connected to the communication line. Predetermined timing clocks are supplied to the timing clock supply line, the unique address of the terminal unit connected to the communication line is transmitted to the unique address communication line, and communication with the terminal unit is controlled through the LAN line by the communication control unit. Moreover, the terminal unit transmits its own unique address to the unique address transmission line during a predetermined address registration period, when it failed to find its own unique address in unique addresses transmitted from the communication control unit.

### BRIEF DESCRIPTION OF THE DRAWINGS

FIG. 1 shows a block diagram of one embodiment of a communication apparatus according to the present invention.
FIG. 2 shows a perspective view of a plug and socket of FIG. 1.
FIG. 3 shows a block diagram of a communication control unit of FIG. 1.
FIG. 4 shows a timing chart of signals transmitted and received via a communication line of FIG. 1.
FIG. 5 shows a timing chart of other signals transmitted and received via the communication line of FIG. 1.
FIG. 6 shows a front view of a communication control unit of FIG. 1 in an installed state.
FIG. 7 shows a block diagram of a variation of FIG. 1.

### DETAILED DESCRIPTION OF THE INVENTION

A first embodiment of the communication equipment according to the present invention is described below with reference to the drawings.

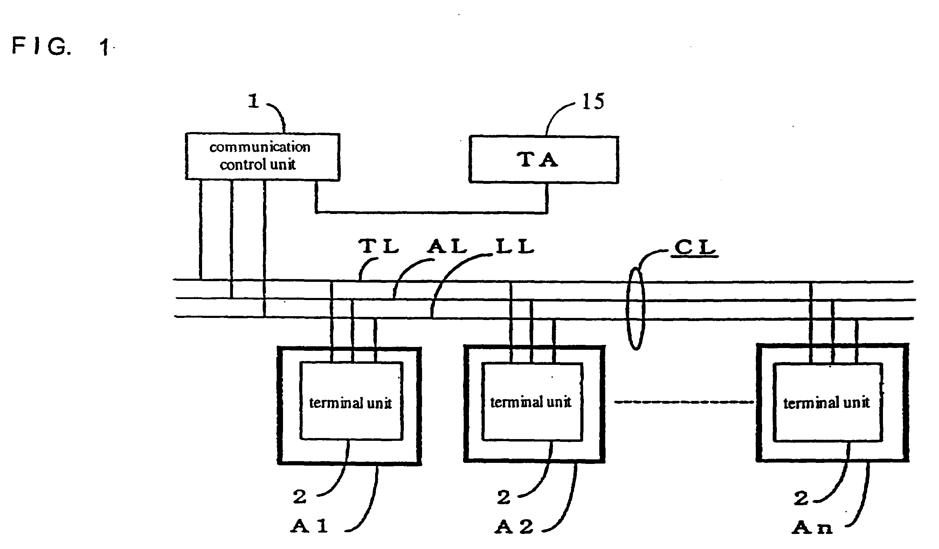

In FIG. 1, a communication control unit 1 and a plurality of terminal units 2 are connected each other through a communication line CL, and the communication line CL is provided with a timing clock supply line TL, a unique address communication line AL, and a local area network (LAN) line LL. Each terminal unit 2 is built in, or connected to apparatus such as home electric appliances, A1, A2, ..., An, to perform necessary communication for the apparatus.

The timing clock supply line TL is a line to supply a timing clock CLK generated in the communication control unit 1 to each terminal unit 2. The unique address communication line AL is used for communication of a unique address of each terminal unit 2, details of which will be described below. And, the LAN line LL is used for a local area network between the communication control unit 1 and the terminal units 2, and between the terminal units 2 each other.

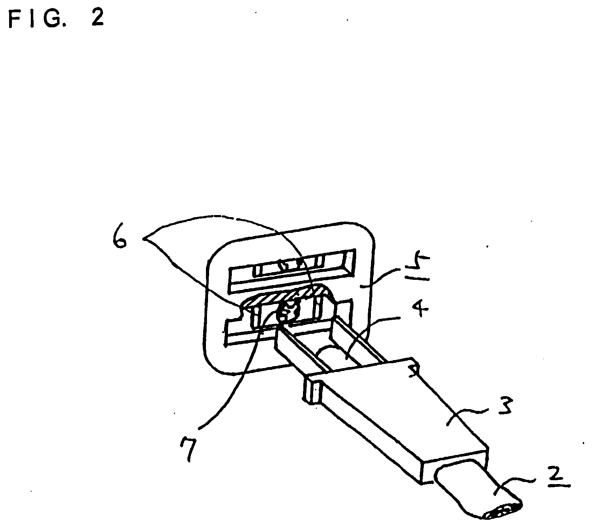

FIG. 2 is a perspective view of the terminal unit 2, which is connected to the communication line CL. A plug 3 for power supply to the terminal unit 2 is provided with a communication terminal 4 to connect the terminal unit to the communication line CL. In the meanwhile, a socket 5 of a distributing system of interior power supply wiring is provided with a communication terminal 7 corresponding to the communication terminal 4, other than a power supply terminal 6. When the plug 3 is connected to the socket 5, the communication terminals 4 and 7 are also connected each other.

The activity of inserting the plug 3 to the socket 5 is a mere daily work for users of the apparatus A1-An. The communication terminals 4 and 7 are connected each other consequently by this daily activity. This enables, even for users, who are unfamiliar with multimedia or communications , the connection between the apparatus A1-An.

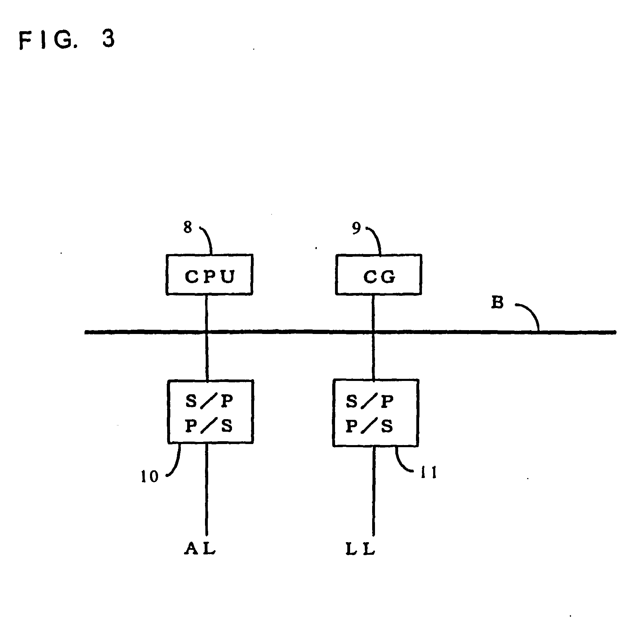

In FIG. 3, the communication control unit 1 comprises a central processing unit CPU 8 and a clock generator 9, which are both connected to a bus B. The clock generator 9 generates the above timing clock CLK, and supplies it to the timing clock supply line TL through the bus B. In addition, the communication control unit 1 is provided with parallel/serial and serial/parallel converters 10 and 11. The converters 10 and 11 are connected to the unique address communication line AL and the LAN line LL, respectively. Both the unique address communication line AL and the LAN line LL are one-bit signal lines. The one-bit signals are converted to a plurality of bits (parallel signals) in the converters 10 and 11, and supplied to the bus B. The above CPU 8 transmits parallel signals corresponding to the signals of the unique address communication line AL and the LAN line LL. The transmitted signals are converted into serial signals in the converters 10 and 11, respectively, and supplied to the unique address communication line AL and the LAN line LL, respectively.

In this way, taking the unique address communication line AL and the LAN line LL respectively as a one-bit serial signal line offers a simple and inexpensive plug 3 and socket 5, and thereby may reduce the costs of wiring. Simplicity and low cost are indispensable factors to promote the apparatus.

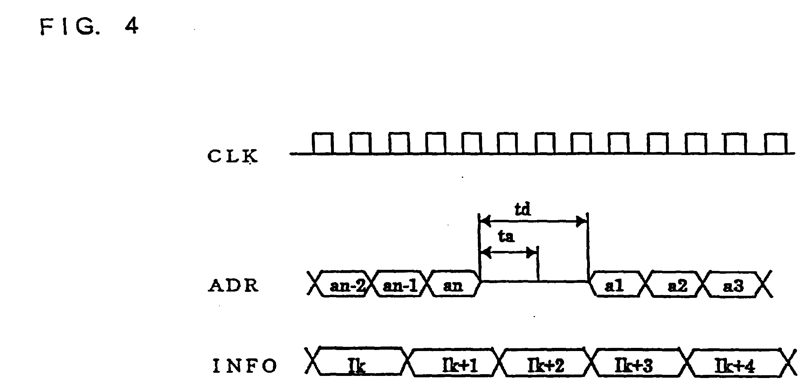

FIG. 4 is a timing chart of signals transmitted and received via the timing clock supply line TL, the unique address communication line AL, and LAN line LL. The timing clock CLK on the timing clock supply line TL is a pulse having a predetermined frequency. Signals on the unique address communication line AL and the LAN line LL are transmitted at a cycle based on the timing clock CLK. The unique addresses a1-an of the terminal units 2 in the connected apparatus A1-An are transmitted from the communication control unit 1 to the unique address communication line AL. The Internet Protocol addresses defined in the LAN, or, otherwise specified addresses respectively for the terminal units 2 may be used as unique addresses. In a period td between transmission of the last unique address an, and the subsequent transmission of the first address a1, the communication control unit 1 transmits no unique address. The period td is a registration period, when terminal units which failed to find their own unique address in the addresses a1-an transmit their own address to the communication line. Timings ta for transmission of the unique addresses from the terminal units are set based on the unique addresses. For example, when the unique address is given by ax and a coefficient of a natural number by k, the timing ta is set at a point in time (k x ax) seconds after the beginning of the registration period. This eliminates the possibility that there may be crashed transmission of the unique address from the terminal units 2. Moreover, transmission of unique addresses of other terminal units is prohibited during transmission of a unique address from one terminal unit, and the unique addresses of the other terminal units are transmitted during or after the next registration period. The communication control unit 1 reads one or more unique addresses transmitted during a registration period to register the one or more unique addresses as addresses for terminal units newly connected.

When a new apparatus is connected, this allows automatic settings for communications and eliminates the need for operation by users such as settings for the communications.

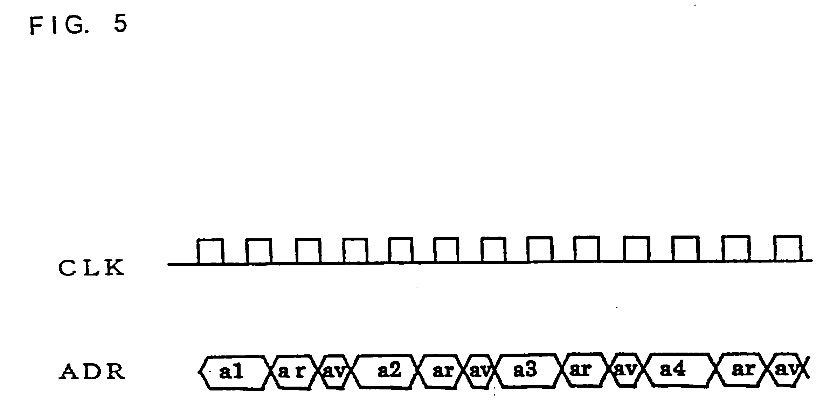

In FIG. 5, during the arrive determination period taj, the communication control unit 1 checks whether the terminal units connected once are removed or not. That is, the communication control unit 1 transmits request signals ar for arrive signals to the terminal units sequentially after sequential transmission of each unique address a1-an. While the terminal units transmit arrive signals av to the communication control unit 1, when request signals ar for arrive signals are received sequentially after their own addresses. When the communication control unit 1 cannot receive arrive signals av, it regards that the terminal units have been removed.

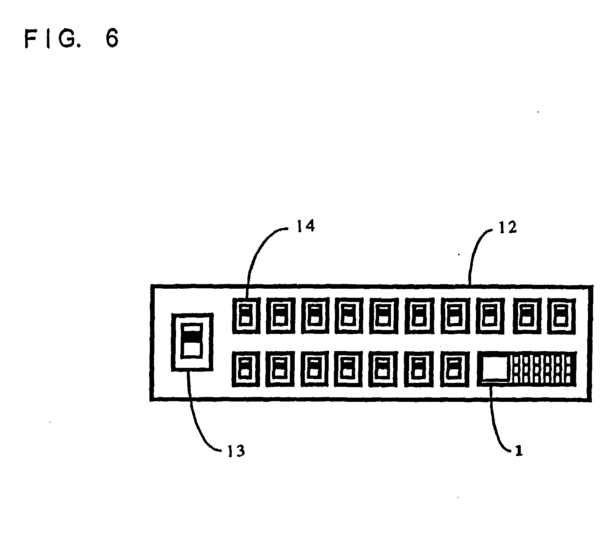

In FIG. 6, the communication control unit 1 is installed in a switch board 12, together with a main breaker 13 and breakers 14, for example. The communication line CL (FIG. 1) is laid down along the wiring of the distributing system of interior power supply. Laying-down of the communication line CL with the wiring of the distributing system of interior power supply facilitates connection of the communication line to each socket 5(Fig.2). Moreover, when the communication control unit 1 is beforehand unable to be installed in the switch board 12, the communication control unit 1 is connected to any one of sockets 5, that is, to the communication line CL connected to the socket 5.

Although the communication control unit 1 makes communication between the terminal units 2 possible as shown in FIG. 1, it may take a configuration of connecting routers (not shown) and terminal adapters 15 thereto, building it in the local area network, and receiving signals from the public telephone networks therein.

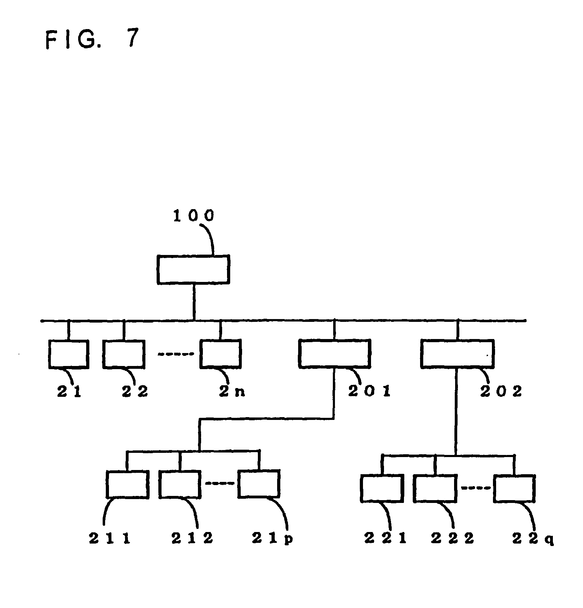

When a second communication control unit 1 is connected, the communication control unit is rejected, or set as one of terminal units to serve as a lower layer communication control unit, in order to avoid confusion of communication caused by connection of a plurality of the communication control units 1 to the communication line CL. Fig.7 shows hierarchically connected communication units. In Fig.7, terminal units 21-2n, and communication control units 201 and 202 are connected as terminal units to the uppermost communication control unit 100. Terminal units 211-21p are connected to the communication control unit 201, and terminal units 221-22q to the communication control unit 202. The above hierarchical configuration is effective for large-scale communication apparatus used for big buildings and so on.

As mentioned above, the present invention realizes very easy communication between the apparatus.

### DESCRIPTION OF THE REFERENCE NUMERALS

1. communication control unit
2. terminal unit

- CL: communication line
- TL: timing clock supply line
- AL: unique address communication line
- LL: LAN line
- A1-An: apparatus
- Td: registration period

## Claims

1. A communication equipment, comprising:
a communication distributing terminal provided in a power supply socket of a distributing system of interior power supply wiring;
a communication line including a timing clock supply line, a unique address communication line, and a local area network (LAN) line, each connected to communication distributing terminals;
a terminal unit to connect an apparatus connected to said power supply socket to said communication line, having its own unique address;
a communication control unit connected to said communication line, supplying a predetermined timing clock to said timing clock supply line, transmitting said unique address of said terminal unit connected to said communication line to said unique address communication line, and controlling communication between said terminal units through said LAN line;
wherein said terminal unit transmits its own unique address to a unique address transmission line during a predetermined address registration period, when it failed to find its own unique address in unique addresses transmitted from said communication control unit.

2. A communication equipment according to claim 1, wherein a timing for said terminal unit to transmit said unique address during said address registration period is determined based on said unique address.

3. A communication equipment according to claim 1, wherein said address registration period is a period between ending of sequential transmission of said unique addresses of all of said terminal units, and beginning of subsequent transmission of said unique addresses of all of said terminal units.

4. A communication equipment according to claim 2, wherein a timing for said terminal unit to transmit said unique address during said address registration period is a point of time where the time proportional to said unique address has elapsed after the beginning of said address registration period.
